# EUROPEAN PATENT SPECIFICATION

(11) **EP 2 244 091 B1**
(45) Date of publication and mention of the grant of the patent: **30.09.2015**
(21) Application number: 09158316.1
(22) Date of filing: 21.04.2009
(51) Int. Cl.: G01N 30/34, G01M 3/26

(54) **Leak detection upstream of a mixing point**
Einem Mischpunkt vorgelagerte Lecksuche
Détection de fuites en amont d'un point de mélange

(43) Date of publication of application: 27.10.2010
(73) Proprietor: Agilent Technologies, Inc., Santa Clara CA 95051 (US)
(72) Inventor: Witt, Klaus, 75210 Keltern (DE); Choikhet, Konstantin, 76337 Waldbronn (DE)
(74) Representative: Barth, Daniel Mathias

(56) References cited:
- EP-A- 0 309 596
- EP-A- 1 589 336
- EP-A- 1 724 576
- US-A- 5 457 626

## Description

### BACKGROUND ART

The present invention relates to a sample separation device.

In liquid chromatography, a fluidic sample and an eluent (liquid mobile phase) may be pumped through conduits and a column in which separation of sample components takes place. The column may comprise a material which is capable of separating different components of the fluidic analyte. Such a packing material, so-called beads which may comprise silica gel, may be filled into a column tube which may be connected to other elements (like a control unit, containers including sample and/or buffers) by conduits.

The composition of the mobile phase can be adjusted by composing the mobile phase from different fluidic components with variable contributions. In case of a leak in a fluidic conduit, or upstream of it, of a sample separation device, the flow and sometimes also the composition of the delivered mobile phase will be altered or disturbed, which may deteriorate proper operation of the sample separation device.

JP 2005257609 discloses a liquid chromatograph device intending to detect a liquid leakage in the whole system of the liquid chromatograph device without using a flow sensor. Consequently, a pressure value is sensed by a sensor arranged in a flow path, which increases when a mobile phase is continuously sent by a feed pump with the flow path closed by a flow-path opening/closing mechanism. The pressure value reaches, sooner or later, a beforehand-set upper limit value of a pressure sensor if no liquid leakage has occurred. If a liquid leakage has occurred in the flow path, however, a pressure increase in the flow path falls short of the upper limit value of the pressure sensor because of a pressure loss at a leakage point. While continuously sending the mobile phase by the feed pump with the flow path closed by a mechanism, a pressure in the flow path is measured after a definite period of time and compared with the upper limit value of the pressure sensor beforehand set by a liquid leakage determination part, thereby determining whether or not a liquid leakage exists in the flow path.

WO 2009/062538 A1, by the same applicant Agilent Technologies, discloses that in a high performance liquid chromatography system, wherein a mobile phase is driven through a stationary phase for separating compounds of a sample fluid comprised in the mobile phase, a flow rate of the mobile phase is controlled in dependence on a variation in a control value in the system.

Proper operation of a sample separation device may still be difficult when a leak occurs in a sample separation device. Therefore, operation of such a device is often stopped when such a leak is detected, because this device now needs to be repaired.

Leakage checking and calibration of a liquid delivery system is shown in EP 1589336 A1. A bimodal liquid chromatography pump employing artificial intelligence logic feedback control is known from US 5,457,626 A. EP 1724576 A2 discloses an HPLC system, wherein leakage can be determined by metering a nominal flow and measuring the actual flow rate. The leak equals the metered flow rate minus the measured flow rate.

### DISCLOSURE

It is an object of the invention to provide an improved leakage detection. The object is solved by the independent claims. Further embodiments are shown by the dependent claims.

According to an exemplary embodiment of the present invention, a sample separation device (such as a liquid chromatography device) for separating a sample (such as a fluidic sample) is provided. The sample separation device comprises a first fluid conduit (such as a first capillary) for conducting a first fluid (such as water), a second fluid conduit (such as a second capillary) for conducting a second fluid (such as acetonitrile, ACN), a sample separation unit (such as a chromatographic column) adapted for separating the sample, a mixing point (such as an intersection of the first fluid conduit and the second fluid conduit) in fluid communication with and arranged downstream (for instance in relation to a fluid flow direction) of the first fluid conduit and the second fluid conduit and adapted for mixing the first fluid (which may originate from the first fluid conduit) with the second fluid (which may originate from the second fluid conduit) to supply the mixed fluid composition towards the sample separation unit for separation of the sample comprised in the fluid composition, and a leak detection unit (or a leak detection system) adapted for detecting (particularly for determining a position of) a leak (for instance a damaged section of a fluid conduit at which a part of the fluid unintentionally leaves the fluid conduit) upstream (for instance in relation to a fluid flow direction) of or at the mixing point.

The sample separation device further comprises a first displacement pump coupled to the first fluid conduit and configured for pumping the first fluid by a volumetric displacement of the first fluid. The leak detection unit is configured for detecting or locating the leak by analyzing a displacement of the displacement pump in conjunction with a flow at or upstream of the mixing point when the displacement pump is pumping at a predefined pressure. Such a displacement pump may be a pump having a reciprocating plunger for displacing a fluid volume to thereby pump this fluid volume through the fluidic system. A corresponding displacement may be compared to a flow of the fluid through the fluidic system. Interpreting these two parameters in combination may allow to derive position information regarding a possible leak in the fluidic system. For instance, the displacement may be preknown (for instance may be known for a specific operation mode of the sample separation system), measured, (for instance detected by a displacement sensor sensing displacement at a position of the displacement pump) or predefined (for instance may be adjusted by adjusting a specific operation mode of the sample separation system):

The leak detection unit is configured for detecting or locating the leak by analyzing the displacement of the displacement pump when the flow at or upstream of the mixing point is set to zero. Setting the flow to zero may be accomplished by closing a fluid conduit, for example by closing a valve.

According to another exemplary embodiment, a method of leak detection in a system is provided wherein a first fluid is mixed with a second fluid at a mixing point to a fluid composition, and the fluid composition is then supplied for separating a sample comprised in the fluid composition. The method comprises setting the fluid flow at or upstream of the mixing point to zero, analyzing a volumetric displacement of the first fluid pumped at a predefined pressure, and deriving an indication of a leak upstream of or at the mixing point from the analyzed volumetric displacement of the first fluid in conjunction with the analyzed fluid flow at or upstream of the mixing point.

In sample separation systems such as liquid chromatography systems, a sample may be brought in interaction with a sample separation unit, for instance may be trapped on a chromatographic column. A principle of separating different fractions of the sample may then be based for instance on selectively releasing different fractions of the sample from the chromatographic column by conducting a fluidic composition through the column which comprises multiple components. By varying individual contributions of such constituents of such a mobile phase (for instance by applying a so-called gradient), the different fractions may be forced to be released from separation material of the chromatographic column one after the other. A fluid leak in such a fluidic system may have an influence on the performance of a corresponding sample separation experiment. However, it has been recognized by the present inventors that a leak at a position upstream of or at a mixing point at which the different components of the mobile phase are mixed with one another may have a particularly pronounced influence on the resolution, and sometimes even elution order, of a corresponding sample separation experiment since this does not only alter a volumetric flow rate of a mobile phase per time passing a sample separation unit but may also disturb relative concentrations of constituents of the mobile phase. Such altered composition of the mobile phase may influence the sample's component elution in a sensitive manner. Hence, according to an embodiment, particularly the position of a possible leak upstream of a mixing point may be estimated. Corresponding information regarding the leak may then serve as a basis to take necessary measures to prevent undesired impacts of such a leak. For instance, it may be possible to modify, if necessary, the operation mode of the sample separation system to compensate for effects of the leakage. Other appropriate consequences are possible after having located a leak at a position prior to a mixing point at which multiple fluids are to be mixed to form a mobile phase.

For instance, a leakage in a liquid chromatography system may manipulate the composition of various components of a solvent and may therefore shift a gradient away from a target composition. Such a leak may have the effect that a smaller amount of solvent passes the sample which can change the retention time and/or other critical parameters of the fluidic system. For instance, 1 % lower total flow (for instance due to a leak downstream of a mixing point of mixing two or more fluidic components) may shift the retention time by 1% or the like, but 1% change in a composition (for instance due to a leak upstream of a mixing point of mixing two or more fluidic components), especially when eluting complex samples with high molecular weight sample components, may even shift the retention time by 200% or the like.

Next, further exemplary embodiments of the sample separation device will be explained. However, these embodiments also apply to the method.

In an embodiment, the leak detection unit may comprise at least one sensor configured for measuring the flow at one or multiple positions of the fluidic system. Such one or more sensors may be flow sensors, pressure sensors, etc. The flow may be measured directly. It is also possible that the flow is derived indirectly for instance by inspecting a pump behaviour.

The leak detection unit may be configured for deriving the flow by monitoring the displacement behaviour of the displacement pump over time. For instance, a variation of the displacement behaviour (such as a displacement rate) may be analyzed.

In addition to the first displacement pump, the sample separation device may comprise a second pump (which may be as well a displacement pump, or may be of any other appropriate pump type) for pressurizing the second fluid conduit to the predefined pressure (i.e. to the same pressure orto substantially the same pressure as generated by the displacement pump). The leak detection unit may be configured for detecting or locating the leak by determining whether the flow at or upstream of the mixing point is different from zero. If the flow differs (or differs more than a predefined threshold value) from zero, this may be considered as a decision criteria for assuming the presence of a leak. In the described embodiment, the first fluidic conduit may provide a pressure, and the second fluidic conduit may provide a counter pressure neutralizing the pressure and preventing a flow only in the absence of a leak.

In an embodiment, a piston pump may be operated with a constant pressure or performance against a fluidically blocked system. The motor would first go high, would come under pressure, would become slower under the load, and should then stand still. In case of the occurrence of a leak, the pressure will be lowered and the motor would rotate slow but continuously. Such an event may be interpreted as a leak.

The leak detection unit may be arranged at least partially at a position to detect or locate a leak in at least one of the first fluid conduit and the second fluid conduit (or optionally in at least one further fluid conduit upstream a mixing point). The two (or more) fluid conduits through which the various components of the fluidic composition are conducted (for instance water and an organic solvent such as ACN) individually is considered as a position in a fluidic path at which a leak has a particularly strong disturbing influence on a sample separation experiment. Thus, detecting a leak in these fluid conduits and locating the leak can increase the reliability of sample separation significantly.

In an embodiment, the leak detection unit may be adapted for performing a fluid conduit specific detection of a leak. Thus, the leak detection unit may be configured in such a manner that a specific fluid conduit may be identified in which the leak has occurred. Therefore, not only the occurrence of a leak may be detected, but it may be found out which of multiple fluidic conduits is the origin of a leak, or to what extent each of the individual channels contributes to the total leak. This may simplify it for an operator to perform a repair mechanism and may further serve as a basis for evaluating a qualitative or even quantitative impact of such a leak on a separation procedure. Thus, such channel specific leak detection may allow to specifically determine or apply an appropriate countermeasure.

Particularly, the leak detection unit may comprise a first sensor (such as a first leak sensor) arranged in the first fluid conduit and adapted for sensing a first parameter value indicative of a quantity of the first fluid flowing through the first fluid conduit. The leak detection unit may comprise a second sensor (such as a second leak sensor) arranged in the second fluid conduit and adapted for sensing a second parameter value indicative of a quantity of the second fluid flowing through the second fluid conduit. By locating corresponding leak sensors in individual ones of the first and the second fluid conduit, it may not only be possible to locate the leak but also to evaluate the leakage in a quantitative manner by using a sensing parameter of the corresponding leak sensor. Such a sensor may be capable of determining a parameter which is considered to change unambiguously and sensitively in the event of a leak.

In an embodiment, the first sensor may be a first pressure sensor for sensing a first pressure value as the first parameter value. The second sensor may be a second pressure sensor for sensing a second pressure value as the second parameter value. Pressure detection may be an efficient way to detect the presence or absence of a leak in a quantitative way. Particularly, a time dependent change (more particularly a decrease, still more particularly an initial continuous decrease) of a pressure value within a fluid supply line may be an indicator for a leak, since the presence of a leak may reduce a pressure value in a specific conduit.

Alternatively, the first sensor may be a first flow rate sensor for sensing a first flow rate value as the first parameter value. The second sensor may be a second flow rate sensor for sensing a second flow rate value as the second parameter value. Hence, one or more flowmeters (for instance for quantifying fluid movements in terms of volumetric or mass flow rates) may be provided and adapted for measuring a flow rate of a part of the fluid. A leak in a conduit may result in a characteristic change of the flow rate in the corresponding channel.

Alternatively, in the event that absolute flow sensor readings depend on the solvent in use, the pump can be operated in a mode that one channel (primary) drives the flow and the respective other channels (secondary) are driven to maintain their flows at zero. This way the absolute scaling (a gain factor may depend on solvent) of the sensors in the secondary channels can be neglected. This mode can be cycled across the channels, allowing to detect leak rates for all the channels.

In an embodiment, the leak detection unit may comprise a sensor arranged in the first fluid conduit and adapted for sensing a first parameter value indicative of a quantity of the first fluid flowing through the first fluid conduit, and a total leak sensing entity adapted for sensing a total leak in the sample separation device. The leak detection unit may be further adapted for deriving a second parameter value indicative of a quantity of the second fluid flowing through the second fluid conduit based on a difference between the total leak and a leak in the first fluid conduit. In such an embodiment, a total leakage rate may be measured by the system, for instance by comparing an amount of fluid introduced into the system at the fluid conduits with an amount of fluid exiting at an end of the fluidic path. The difference between these amounts can be considered to be lost due to leakage, If additionally the leakage in one of the for instance two fluid conduits is measured, and if a section downstream of the mixing point is considered leakage-free, the remaining leak contribution has to be provided by the other fluid conduit. Such a difference measurement may be simple and may be fail-safe. A valve for leakage location purposes may be dispensable in such an embodiment. The sensor may be, for instance, a pressure sensor or a flow rate sensor.

It is also possible that pressure sensors and flow rate sensors are combined, for instance to implement a pressure sensor and a flow rate sensor in at least one of the fluidic conduits, or that one of the fluidic conduits comprises (for instance only) a pressure sensor and the other fluidic conduit comprises (for instance only) a flow rate sensor.

At least a leak-sensitive portion of the leak detection unit may be located at (for instance directly at, adjacent to or close-by) a wearing part of the sample separation device which may be a weak part of a fluidic system and therefore a realistic candidate for the occurrence of a leak. In other words, there may be a close spatial relationship between the leak detection unit and such a wearing part. A wearing part may be considered as a member of a sample separation device which is particularly prone to failure after a certain lifetime which is smaller, particularly significantly smaller, than a lifetime of the sample separation device. Examples for such wearing parts are a sealing (for instance a rubber O-ring) or a fluidic valve of a fluidic apparatus. Such wearing parts may have to be substituted from time to time in the sample separation device. When their lifetime is about to end, they may start to become leaky. Such an event can be located according to an exemplary embodiment, and corresponding measures can be taken to substitute these parts in due time.

The leak detection unit may be adapted for quantifying a leak rate (for instance in terms of lost fluid volume or fluid mass per time unit, for example microliters per minute) of a detected and located leak. Thus, the leak detection unit may not only indicate a spatial position or a fluidic conduit or specific part of a sample separation device in or at which the leak is present, but it is also possible that the quantity of the leakage is indicated by the leak detection unit.

In an embodiment, the leak detection unit may be adapted for detecting and locating a leak by executing the following procedure:
- (for instance individually) blocking the first fluid conduit or the second fluid conduit (wherein blocking may mean that the blocked fluid conduit, under the assumption that no leak is present in this fluid conduit, cannot further conduct any liquid since the liquid flow within the corresponding fluid conduit is interrupted at a blocking position);
- measuring a flow rate dispensed into the blocked fluid conduit in the presence of pressure (in the absence of a leak, blocking may result in a zero flow rate in the blocked fluid conduit; in the presence of a leak, the only way that fluid can be dispensed through the blocked fluid conduit is that the fluid passes the leak, so that the leak rate measured/dispensed in a blocked state is indicative of the extent of the leak);
- quantifying a leak rate based on the detected flow rate in the blocked fluid conduit (i.e. a parameter can be determined which includes the information which fluid volume is lost per time unit due to the presence of the leak, wherein the previously measured flow rate can be taken as a basis for this calculation).

Again referring to the previous embodiment, it may be advantageous that the procedure further comprises (for instance between the blocking and the measuring) keeping a provided pressure constant over time in the blocked fluid conduit. Thus, a pump or the like may be functionally coupled with the blocked fluid conduit and may be controlled in such a manner (for instance by providing a pressure sensor reporting a pressure value as a feedback signal to the pump) that the pump provides a constant pressure in this fluid conduit. In such an embodiment, the evaluation of the pump characteristic over time may allow to derive information regarding the flow rate to be measured. Such a procedure of blocking a channel and controlling a pump with a constant pump pressure is a very simple and effective way of quantifying a leak rate.

However, alternatives to the above procedure are possible, one of which will be described in the following. In such an alternative, the leak detection unit may be adapted for detecting and locating a leak by executing the following procedure:
- (for instance individually) blocking the first fluid conduit or the second fluid conduit (wherein blocking may mean that the blocked fluid conduit, under the assumption that no leak is present in this fluid conduit, cannot further conduct any liquid since the liquid flow within the corresponding fluid conduit is interrupted at a blocking position);
- measuring a pressure decrease in the blocked fluid conduit over time (for instance using a manometer or any other pressure sensor for detecting a characteristic pressure profile over time which may then be indicative of the quantity of a leak, since the pressure in a blocked leak-free fluid conduit should be substantially constant over time);
- quantifying a leak rate based on the measured pressure decrease over time and based on a preknown capacitance or correlation (for instance stored in a look-up table or provided as a formula correlating leak rate and pressure curve) between leak rate and pressure over time (for instance as a result of a calibration, a correlation between a leak rate and a pressure decrease over time may be determined experimentally, or such a correlation may derived or calculated theoretically; this information may be used to quantify the leak rate).

The sample separation device may comprise a fluid valve adapted to be switchable between a plurality of operation modes to selectively adjust one of the plurality of operation modes of conducting the first fluid and the second fluid within the sample separation device. Such a fluid valve may comprise multiple inlet ports and outlet ports in fluid communication with various fluidic conduits and may be operable automatically or by a user in a way that specific fluidic connections are enabled and others are disabled in accordance with an operation mode of the fluid valve. Disabling specific fluidic paths by the fluid valve may also allow to affect selective blocking or opening of fluidic conduits for locating and quantitatively evaluating leakage rates, for instance indicating where such leakage rate is present. Since such fluid valves may be provided already in a sample separation device such as a liquid chromatography device, they can be used synergetically for performing a blocking task for leak detection purposes.

The fluid valve may be arranged upstream the mixing point. In other words, a fluid flowing from the fluidic conduits towards the mixing point may pass the fluid valve arranged in between. Alternatively, the mixing point may be integrated within the fluid valve. Hence, the fluid valve may not only serve for defining enabled and disabled fluidic paths, but may also allow to perform a mixing task.

The mixing point may be a specific point in a fluidic path at which the two or more fluids are mixed to one another. This may be a simple intersection of fluidic channels or a dedicated mixing unit such as a curved capillary portion at which the different components are promoted to be mixed to one another.

The fluid valve may be adapted for selectively blocking flow of at least one of the first fluid through the first fluid conduit and the second fluid through the second fluid conduit. In a blocked state, any appropriate algorithm for quantifying a leak based flow rate may be performed.

As an alternative to a switchable fluid valve, a blind plug may be implemented. In such a blind plug system, a body may be plugged into an access hole of the sample separation device to mechanically access a fluidic conduit in the sample separation device for selectively blocking flow of the first fluid through the first fluid conduit and/or the second fluid through the second fluid conduit. Such a blind plug may be manually inserted by a user into a fluidic path or may be automatically inserted into the sample separation system by a control unit.

In an embodiment, the sample separation device may comprise a trigger unit adapted for triggering a predetermined action in accordance with a leak detection result of the leak detection unit. In the event that the leak detection unit has detected and located a leak upstream the mixing point, this event may be reported by the leak detection unit to a trigger unit which may then be adapted for evaluating this information and, if desired or required, for triggering a specific action. An action being appropriate may depend on the characteristic (for instance the intensity) of the leak which may be decided in accordance with one or more predefined criteria.

For example, the action may comprise triggering an alarm to provide an information to an operator of the sample separation device regarding the detected and located leak. Such an alarm may be an acoustic alarm such as an alarm bell. In another embodiment, such an alarm may also comprise an optical alarm such as a blinking light or the like. Combinations of acoustic and visual alarms are possible, as well as other types of alarms, for instance haptic alarms. By such an alarm, a user may be informed regarding the leak so that a user may then take the corresponding measures.

In another embodiment, the action triggered by the trigger unit may comprise triggering an alarm providing information to an operator of the sample separation device regarding a replacement part of the sample separation device to be replaced for repairing the leak. By taking such a measure, the system may assist an operator in repairing the system. For example, an output alarm may present the information "Leak in fluidic conduit XYZ, since seal ABC is leaky. Please replace seal ABC within the next two weeks." Thus, the action may comprise triggering an alarm providing information to an operator of the sample separation device regarding a replacement part of the sample separation device to be replaced for repairing the leak and/or regarding a repair action to be performed.

In still another exemplary embodiment, the action triggered by the trigger unit may comprise triggering ordering of a replacement part of the sample separation device to be replaced for repairing the leak. For example, still referring to the above example, the system may automatically trigger ordering of a "seal ABC" when the leak detection unit has detected that this wearing part has become leaky and should therefore be replaced.

However, in another exemplary embodiment, the action triggered by the trigger unit may comprise triggering a modified operation mode (modified as compared to a present operation mode) of operating the sample separation device to at least partially compensate for an influence of the detected and located leak on a performance of the sample separation device. An example for such an embodiment is a liquid chromatography apparatus in which a leak occurs in a fluidic conduit providing one fluid for a multi-component solvent for a gradient run. The present inventors have recognized that in such a scenario even a very small leak can cause significant changes of the retention time and may therefore deteriorate the separation procedure significantly. In order to compensate for such leak based measurement artifacts, the trigger unit may use the derived information regarding the leak to readjust the operation mode of the liquid chromatography device in such a manner that this deterioration of the system is compensated. For example, the leaky fluidic conduit may be supplied with a larger amount of liquid than needed for a regular gradient run which then, after loss due to the leak, results in a proper gradient run for releasing the different fractions of the sample from a chromatographic column in a correct manner.

For instance, the modification action triggered by the trigger unit may include one or more of the following operation modes:
- A quantity (for instance a fluid volume or mass delivered per time) of the fluid composition of the first fluid and the second fluid may be modified (for instance may be increased or decreased).
- A time-dependence of the fluid composition of the first fluid and the second fluid may be modified (for instance the time-dependence of a gradient run may be shifted to an earlier or later time).
- A relative contribution of at least one of the first fluid and the second fluid to the fluid composition may be modified (for instance, the first fluid contribution may be increased or decreased while the second fluid contribution is simultaneously increased, decreased or maintained constant).
- An operation of one or more pumps for pumping the first fluid and/or the second fluid may be modified. For instance, a pumping power may be selectively increased or decreased individually for a respective fluid conduit.

However, other operation modes which can at least partially compensate the influence of a detected leak may also be altered by the system upon detection of the leak. In all these cases, it is possible that a user is additionally informed about the machine triggered modification of the operation mode.

In an embodiment, the action triggered by the trigger unit may comprise a modified operation mode of operating the sample separation device so as to perform a defined destination mode of operating the sample separation device adjusted by an operator prior to the occurrence of the leak. Therefore, when a leak has occurred and the previously adjusted parameters of an operator do not match anymore in view of the impact of the leak, the system may automatically suggest or perform a manipulation of the operation parameters which can compensate the effect of the leak partially or completely. For example, the action may comprise operating a pump pumping a respective fluid to a respective fluid conduit having a detected and located leak with a pump rate being increased as compared to a leak-free pump rate in accordance with a leak rate in the respective fluid conduit.

In still another embodiment, the action triggered by the trigger unit may comprise switching off the sample separation device upon detection of a leak. This may be a safety feature which may be initiated by the sample separation device upon detection of a leak which can deteriorate the sample separation device or an experiment presently carried out significantly. For instance, switching off the sample separation system may be appropriate when determining that a modification of an operation mode will not be capable of efficiently suppressing impact of the leak on the experimental performance.

A first fluid rate adjustment unit may be adapted for adjusting a flow rate of the first fluid in the first fluid conduit. In a similar manner, a second fluid rate adjustment unit may be provided for adjusting a flow rate of the second fluid in the second fluid conduit. The first fluid rate adjustment unit may be provided separately from the second fluid rate adjustment unit. Alternatively, the two fluid rate adjustment units may be integrated within one integrated component. The fluid rate adjustment unit or units may be a pump or pumps, for instance piston pumps, which are capable of pumping the fluid through the respective fluidic conduit. By adjusting the pumping power, the flow rate of the corresponding fluid may be adjusted which can be used for leak detection and/or quantification purposes as well. In an embodiment, a system may be provided in which a pump performs a self-repairing procedure upon detection of a leakage.

Some scenarios in which a leak may be generated are an erroneous sealing or a newly installed sealing in the first hours of the operation. In these and other cases, knowledge of the position of the leak in an individual channel may be used for compensating corresponding artifacts so that a target result may still be achieved. However, taking this measure may require the knowledge of the leak position in a channel specific manner. Upon detection and location of such a leak on a channel-based level, a pre-warning function may be implemented indicating a user that a sealing or any other wearing part leaks and should be substituted. In such a case, the device itself may trigger ordering a new seal and may operate, until the new seal is delivered, with a specific compensation. In an embodiment, when a leak is detected, a compensation mode may be run so that the device delivers analysis results like a properly operating device would do, due to the leak specific compensation. For this purpose, it may be appropriate to install leakage sensors specifically at possible weak points of the system (for instance close to wearing parts).

A channel-specific leak detection in a sample separation device in a fluidic section towards a mixing point by individually measuring in different fluidic channels regarding a possible leakage may allow to significantly improve robustness of operation of a sample separation device.

A fluidic channel downstream the mixing point may serve as a processing element filled with a separating material. Such a separating material which may also be denoted as a stationary phase may be any material which allows an adjustable degree of interaction with a sample so as to be capable of separating different components of such a sample. The separating material may be a liquid chromatography column filling material or packing material comprising at least one of the group consisting of polystyrene, zeolite, polyvinylalcohol, polytetrafluorethylene, glass, polymeric powder, silicon dioxide, and silica gel, or any of above with chemically modified (coated, capped etc) surface. However, any packing material can be used which has material properties allowing an analyte passing through this material to be separated into different components, for instance due to different kinds of interactions or affinities between the packing material and fractions of the analyte.

At least a part of the processing element may be filled with a fluid separating material, wherein the fluid separating material may comprise beads having a size in the range of essentially 0.1 µm to essentially 50 µm. Thus, these beads may be small particles which may be filled inside the separation section of the microfluidic device. The beads may have pores having a size in the range of essentially 0.01 µm to essentially 0.2 µm. The fluidic sample may be passed through the pores, wherein an interaction may occur between the fluidic sample and the pores.

The sample separation device may be adapted as a fluid separation system for separating components of the sample. When a mobile phase including a fluidic sample passes through the fluidic device, for instance by applying a high pressure, the interaction between a filling of the column and the fluidic sample may allow for separating different components of the sample, as performed in a liquid chromatography device.

However, the sample separation device may also be adapted as a fluid purification system for purifying the fluidic sample. By spatially separating different fractions of the fluidic sample, a multi-component sample may be purified, for instance a protein solution. When a protein solution has been prepared in a biochemical lab, it may still comprise a plurality of components. If, for instance, only a single protein of this multi-component liquid is of interest, the sample may be forced to pass the columns. Due to the different interaction of the different protein fractions with the filling of the column (for instance using a gel electrophoresis device or a liquid chromatography device), the different samples may be distinguished, and one sample or band of material may be selectively isolated as a purified sample.

The sample separation device may be adapted to analyze at least one physical, chemical and/or biological parameter of at least one component of the mobile phase. The term "physical parameter" may particularly denote a size or a temperature of the fluid. The term "chemical parameter" may particularly denote a concentration of a fraction of the analyte, an affinity parameter, or the like. The term "biological parameter" may particularly denote a concentration of a protein, a gene or the like in a biochemical solution, a biological affinity of a component, etc.

The sample separation device may be implemented in different technical environments, like a sensor device, a test device, a device for chemical, biological and/or pharmaceutical analysis, a capillary electrophoresis device, a capillary electrochromatography device, a liquid chromatography device, a gas chromatography device, an electronic measurement device, or a mass spectroscopy device. Particularly, the fluidic device may be a High Performance Liquid device (HPLC) device by which different fractions of an analyte may be separated, examined and/or analyzed.

The sample separation unit element may be a chromatographic column for separating components of the fluidic sample. Therefore, exemplary embodiments may be particularly implemented in the context of a liquid chromatography apparatus.

The sample separation device may be adapted to conduct a liquid mobile phase through the sample separation element and optionally a further sample separation element. As an alternative to a liquid mobile phase, a gaseous mobile phase or a mobile phase including solid particles may be processed using the fluidic device. Also materials being mixtures of different phases (solid, liquid, gaseous) may be processed using exemplary embodiments.

The sample separation device may be adapted to conduct the mobile phase through the system with a high pressure, particularly of at least 600 bar, more particularly of at least 1200 bar.

The sample separation device may be adapted as a microfluidic device. The term "microfluidic device" may particularly denote a fluidic device as described herein which allows to convey fluid through microchannels having a dimension in the order of magnitude of less than 500 µm, particularly less than 200 µm, more particularly less than 100 µm or less than 50 µm or less. The sample separation device may also be adapted as a nanofluidic device. The term "nanofluidic device" may particularly denote a fluidic device as described herein which allows to convey fluid through nanochannels having even smaller dimensions than the microchannels.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawings. Features that are substantially or functionally equal or similar will be referred to by the same reference signs.

Fig. 1 illustrates a liquid chromatography system according to an exemplary embodiment.

Fig. 2 shows a diagram which illustrates influences of a leak in a fluidic channel on a detection result of a liquid chromatography system.

Fig. 3 is a diagram showing a correlation between a programmed pressure of a pump and the time.

Fig. 4 is correlated to Fig. 3 and shows a corresponding correlation between a leak rate and the time, when the programmed pressure is applied.

Fig. 5 shows a part of a sample separation device according to an exemplary embodiment.

The illustration in the drawing is schematically.

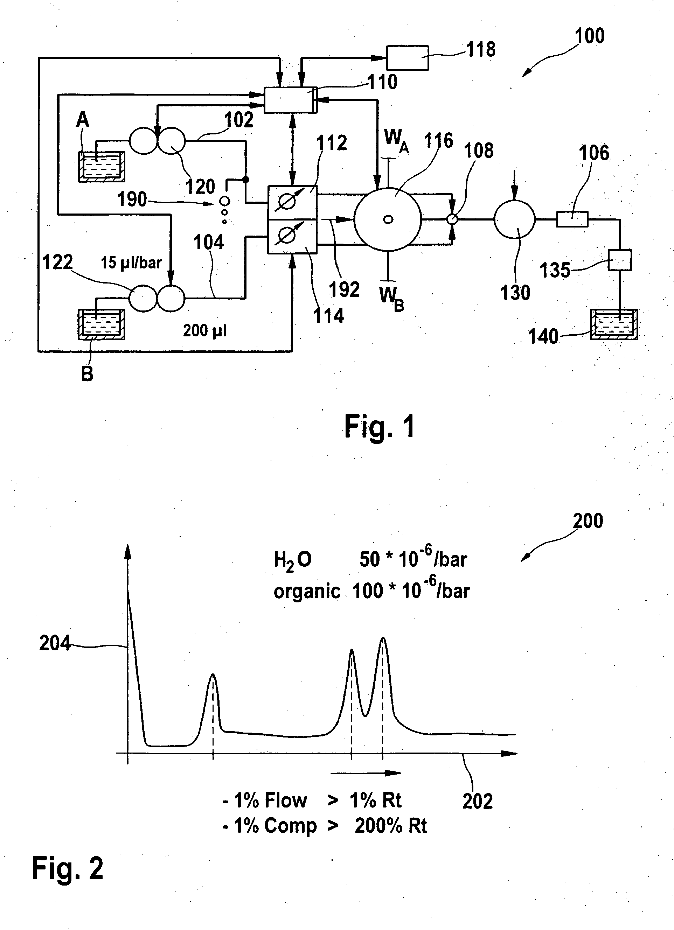

**Fig. 1** depicts a liquid separation system 100 according to an exemplary embodiment.

Pumps 120, 122 drive a mobile phase through a separating device 106 (such as a chromatographic column) comprising a stationary phase. A sampling unit 130 can be provided in a fluidic path between the pumps 120, 122 on the one hand and the separating device 106 on the other hand in order to introduce a sample fluid into the mobile phase. The stationary phase of the separating device 106 (a chromatographic column) is adapted for separating compounds of the sample liquid. A detector 135 (for instance a fluorescence detector) may detect different fractions of the fluidic sample separated by the liquid separation system 100. A fractionating unit 140 (or alternatively a waste) can be provided for outputting separated compounds of sample fluid.

The liquid chromatography device 100 is adapted for separating a sample injected at the sample injection unit 130 by using a mobile phase composed of a first fluid and a second fluid. A first fluid conduit 102 is provided for conducting the first fluid. A second fluid conduit 104 is provided for conducting the second fluid. The first fluid may be water and the second fluid may be an organic solvent such as acetonitrile, ACN. Water is taken from a water vessel denoted with A, and ACN is taken from an organic solvent vessel denoted with B. A first pump 120 pumps the first fluid via the first conduit 102 towards a mixing point 108. A second pump 122 pumps the second fluid via the second fluid conduit 104 towards the mixing point 108.

In the scenario shown in Fig. 1, a leak has occurred at a position 190 within the first fluid conduit 102. It is assumed that the first fluid flow (water) is larger than the leak. Hence, a portion of the water leaks out of the first fluid conduit 102 before reaching the mixing point 108. Consequently, the total volumetric flow is lower than expected and the compositional ratio between water and ACN at a position downstream the mixing point 108 does not fit any longer to the ratio of flows between water and ACN at a position in the fluid conduits 102 and 104 upstream the leak 190.

The mixing point 108 is in fluid communication with and arranged downstream of (in a fluid flow direction indicated with an arrow 192 in Fig. 1) the first fluid conduit 102 and the second fluid conduit 104 and is adapted for mixing the first fluid from the first fluid conduit 102 with the second fluid from the second fluid conduit 104 to supply the mixed fluid composition towards the separation column 106 for separation of the sample injected at a position 130. By modifying the relative contributions of water and ACN in the mixed fluid, a sample trapped on the column 106 may be released from the latter during a gradient run. In this context, a retention time may be considered as a characteristic parameter for the detection and/or identification of separate components of the sample.

As will be described in the following in more detail, a leak detection system of the liquid chromatography system 100 is provided for detecting or even spatially locating the position 190 of the leak upstream of the mixing point 108. In the present scenario, leak 190 has occurred in the first fluid conduit 102. However, the liquid chromatography system 100 is also capable of locating such a leak in the second fluid conduit 104.

A first leak sensor 112 (which may also be denoted as a leak characterization device) is arranged within the first fluid conduit 102 and is adapted for sensing a flow rate indicative of a quantity of the first fluid flowing through the first fluid conduit 102. A second leak sensor 114 (which may also be denoted as a leak characterization device) is arranged within the second fluid conduit 104 and is adapted for sensing a second flow rate value indicative of a quantity of the second fluid flowing through the second fluid conduit 104. Although only two fluidic conduits 102, 104 are shown in Fig. 1, it is possible that three or more such parallel conduits are provided, each for individually supplying a controllable amount of a respective fluid to a mixing tee 108.

A flow rate measured by the flow rate sensors 112, 114 may be transmitted towards and hence reported to a control unit 110. The control unit 110 may have processing capabilities and may, for instance, be configured as a microprocessor or a central processing unit (CPU). Apart from the bidirectional data communication with the flow sensors 112, 114, the control unit 110 may also be in bidirectional data communication with the pumps 120, 122 and with a fluidic valve 116. The control unit 110 centrally controls operation of the liquid chromatography device 100.

Since individual flowmeters 112, 114 are arranged upstream the mixing point 108 in the individual channels 102, 104, a channel-specific detection of the presence of a leak 190 may be performed based on detected flow rates. For example, in the present scenario, the leak 190 occurs in the first fluid channel 102. This leak can be detected as follows:
- The leak detection unit 110 may be adapted to control pumps 120, 122 in the first fluid conduit 102 and in the second fluid conduit 104 in such a manner that a flow is delivered through only one of the first and the second fluid conduit 102, 104 for generating a system pressure, wherein flow on the other one of the first and the second fluid conduit 102, 104 is monitored by the first sensor 112 or the second sensor 114. More specifically, the control unit 110 may control the pumps 120 and 122 in such a manner that the flow is delivered through one of the fluid conduits 102, 104 such that a system pressure is generated, while no fluid is meant to be transported from the other fluidic conduit 102, 104 towards the mixing point 108. Flow on this other conduit is now monitored by the respective flowmeter 112,114 and its pump is commanded to a flow value at which the sensor toggles polarity. This way no fluidic valve 116 is required.
This leak can also be detected as follows:
- The control unit 110 may control the fluidic valve 116 in such a manner that the first fluid conduit 102 is blocked for a test time interval. In such a blocked state, no fluid can be transported from the first fluidic channel 102 towards the mixing point 108, since the corresponding channel is blocked by a corresponding mode of the fluidic valve 116.
- In this blocked state, the control unit 110 may trigger the first flow sensor 112 to measure and report a flow rate in the blocked first fluid conduit 102 in the presence of a pressure in the first fluid conduit 102 maintained constant by the pump 120. The measured flow rate may be evaluated by the control unit 110, eventually in combination with the commanded speed to the pump 120, for quantifying a leak rate of the blocked first fluid conduit 102. During such a procedure, the pump 120 is controlled to keep the pressure constant over time in the blocked first fluid conduit 102. Therefore, the entire flow rate in the first fluid conduit 102 in the blocked state with the pump 120 operating with a constant pressure results from the leak 190, which can therefore be quantified, for instance by reading the commanded speed of the pump 120.

The fluid valve 116 is adapted to be switchable between a plurality of different operation modes to selectively adjust one of a plurality of operation modes of conducting the first fluid and the second fluid through the sample separation device 100. The fluid valve 116 comprises a number of inlet ports and a number of outlet ports and may, by correspondingly controlling the fluid valve 116, provide a fluid communication between a respective one of the inlet ports with a respective one of the outlet ports. By correspondingly controlling the fluid valve 116, is it also possible to disable a fluid communication from a respective one of the inlet ports through the fluid valve 116 by blanking off the respective one of the inlet ports.

Upon detection of such a leak, the control unit 110 may report the corresponding event to a trigger unit 118. The trigger unit 118 may be adapted for triggering an appropriate action in accordance with a location result of the detected leak, and/or in accordance with the quantity of the leakage. For example, the trigger unit 118 may trigger an alarm indicating to a user that a leak has occurred and that this leak has occurred in the first fluidic channel 102. The trigger unit 118 may also indicate to the user that a probable origin of the leak 190 is a damaged seal in the first fluidic conduit 102.

Furthermore, the trigger unit 118 may trigger a modified operation mode of operating the liquid chromatography device 100 to compensate for an influence of the detected and located leak on a performance of the sample separation device 100. For this purpose, the trigger unit 118 may evaluate which influence the position and/or the quantity of the leak 119 has on a sample separation procedure of the liquid chromatography device 100. For example, the trigger unit 118 may calculate how a retention time of a fraction of the sample at the chromatography column 106 is influenced by the leak 190. The trigger unit 118 may then control the control unit 110 to control the pump 120 in such a manner that fluid A is provided in excess so that, under consideration of the leakage loss at the leak 190, a correct amount of fluid A is delivered at the mixing point 108 so that the chromatographic experiment can be run as with a liquid chromatography apparatus 100 being leak-free.

In the following, some basic recognitions of the present inventors will be described based on which exemplary embodiments have been developed.

In an embodiment, the detection, calibration and correction of leaks in individual channels of gradient pumps may be performed.

In liquid chromatography (LC), the performance of a corresponding separation device may be defined by characterizing reproducibility of the following result parameters:
- Retention time (Rt): a run time at which a peak appears in a detector
- Peak area (PA), for instance in (mAU·s): integrated for instance absorbance signal from peak begin to end

In HPLC (High Performance Liquid Chromatography) separations, it is an expectation to achieve a reproducibility of retention times in the sub-digit percent range. This leads to the requirement that all influential factors should be controlled to an optimum precision. While peak area may be the more easy aspect, in analytical applications retention time stability may be a challenge. In Reverse-Phase Liquid Chromatography, large molecules (like for instance proteins) may exhibit a steep "adsorption isotherm", which generally means that minute changes in organic concentration may influence the retention time dramatically, even under isocratic conditions.

For a given sample species, retention times are generally dependent on column type and geometry, its temperature, the actual flow rate and the actual mobile phase composition. While the column type and geometry are pretty stable parameters, temperature, flow rate and solvent composition may easily show variance. This holds for pumping systems which generate solvent composition by delivering concurrently individual flows of for instance water and organic to the system. During sample separation operation the separation column is held in a controlled environment, like a column oven. So, temperature effects may be neglected with appropriate approximation.

On the side of total flow rate through the system, a transfer function may be considered to be almost a normal 1/x relation, which results in about 1% shift in retention time for a 1 % lower flow rate. If the retention time is expected in a 1 % window with a total flow of 500 µl/min, a leak rate of about 5 µl/min may still be acceptable.

But if the leak rate happens at a point in the system which is upstream from the mixing point, then there is an additional impact also on solvent composition. At an expected composition of for instance 15% B and total flow of 500 µl/min, the same 5 µl/min leak in the organic (B) channel may shift the solvent composition to almost 14% B. But in case of steep "adsorption isotherms" this may result easily in a 50% shift to longer retention time. This way blending the solvent composition may have a 50 times higher requirement to achieve the same retention time precision. In view of these considerations, it is vital not only to know the extent of leakage, but also to know where (in which solvent path) it is actually leaking.

On the basis of these considerations, particularly the following embodiments have been developed.

For precise pumping actions, both in total flow rate and in solvent composition, it either needs a leak free condition or the leak needs to be corrected for. While in most cases a leak behind (i.e. downstream of) a mixing tee (T) may be accepted, even minor leaks in the individual pumping channels may be seen on the retention times because of the magnification effect of the "adsorption isotherm" being steep enough.

Severe leaks are seen from liquid dropping down, while minor leaks (for instance smaller than 5 µl/min) often hide long and may be hard to diagnose, since the liquid (especially organic solvent) evaporates fast enough. Usually, a detected leak is a reason to repair, which then is followed by leak diagnostic (to increase reliability).

Leak correction according to exemplary embodiments is based on the approach to quantify the leak, especially identified in individual channels, and then the control of these channels is correcting for the flow loss.

If for a given pressure level the current leak rate is known, a correction may be performed by adding the leak rate onto the commanded flow rate before the displacement of the individual pump drive is calculated.

In the case of gradient elution, there is usually also a viscosity gradient overlaid, which in turn results in a pressure change (under constant flow operation) across the gradient time. In order to perform descent a leak correction in the case of gradients, it may require to know the actual leak rate all across the pressure range (at least the pressure range as experienced during the gradient analysis).

It is a possibility to qualify individual channels for their leak behaviour. First, the channels may have some independent signal to monitor their pressure. Then the channels may have some feature to block them individually right before the mixing tee. It should be ensured that there is no leak on the passage from this plug valve to the mixing tee, which is kind of normal as the highest risk commonly is connected with piston seals and valves. Leak rate may be quantified by setting a flow rate, which results in a flat pressure profile (keep pressure) at the pressure level where the leak rate is to be investigated. For instance, this can be done at five to ten steps across the entire pressure range (for instance at pressure values of 200 bar-400 bar -600 bar - 800 bar -1000 bar -1200 bar).

Stepwise architectures may be advantageous, because in this case the hydraulic capacitance and the thermal behaviour of the liquid may be crossed out. Interpreting leak rates on a steady pressure slope may need more complex algorithms and an extra set of parameters to derive descent quantitative quality.

In such an approach of a plugged hydraulic system into which a minute amount of flow is delivered, which setting is controlled to achieve a flat constant pressure profile, it may be sufficient to use an averaging function to derive a precise quantitative reading. These readings are then stored correlating to the pressure levels at which they were derived. Such matrix now can be fitted by a regression curve to further smoothen the readings. Quality checks may be added to prevent outliers or to qualify the leak calibration process in itself.

While in leak correction mode, each individual channel may read periodically the appropriate leak rate from this curve (for its actual pressure) and add this rate to the commanded displacement value, before a movement command for the pump is calculated. This way, the individual dispensing rates may be increased by exactly the volumetric loss in that channel, which is actually given at this time under this pressure condition. Net result now is at least an improved, if not precise, composition being delivered at a point behind (say downstream) the mixing tee. Any leak further downstream will only influence the total flow rate, but no longer the solvent composition (which may be 50 times more sensitive in case of the above-mentioned example).

System leak rate (downstream from the mixing tee) can also be compensated for, but this has to be calibrated in an extra step and added to the total flow command, before the individual flow rates for the channels are derived based on their programmed percentage contribution.

**Fig. 2** shows a diagram 200 having an abscissa 202 along which a time according to a chromatographic analysis is plotted. Along an ordinate 204, the intensity of a signal is plotted. For the example of water and an organic solvent, Fig. 2 illustrates how a retention time is shifted when the flow rate is changed by 1% and when the composition is changed by 1%. Particularly the change of the composition due to a leak in an individual channel may have a significant influence on the retention time.

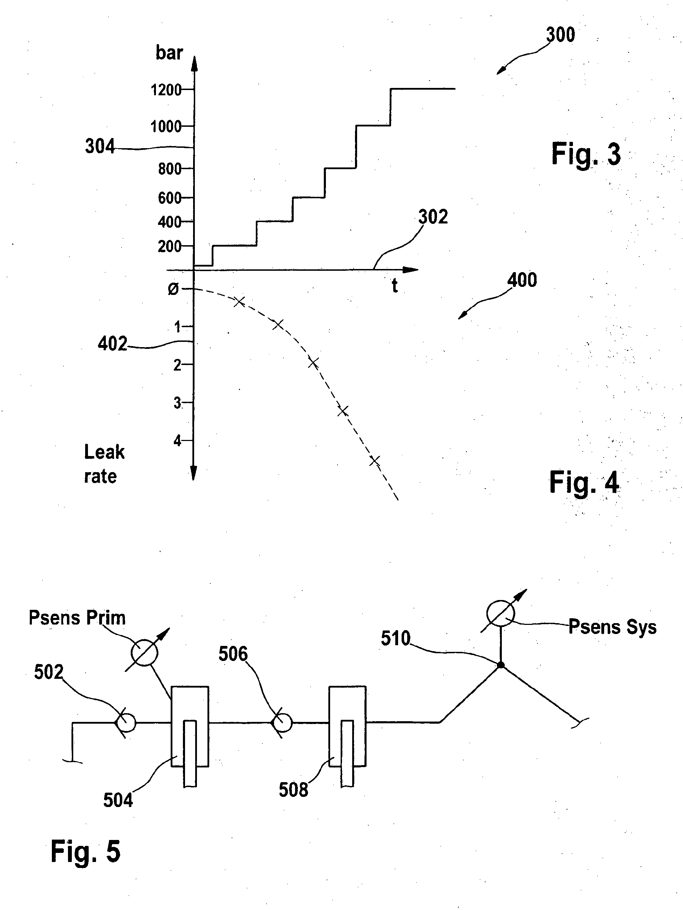

**Fig. 3** shows a diagram 300 and **Fig. 4** shows a diagram 400 sharing a common abscissa 302 along which the time is plotted. Along an ordinate 304 of the diagram 300 and along an ordinate 402 of the diagram 400, the pressure in bar and the corresponding leak rate is plotted, respectively. Thus, Fig. 3 and Fig. 4 show the correlation between leak rate and pressure of a separation device under test.

**Fig. 5** shows a part of a liquid chromatography system according to an exemplary embodiment. A fluid flows through an inlet valve 502. A primary pump 504 is provided where a primary pressure PsensePrim may be measured. After having passed the first pump 504, the fluid passes an outlet valve 506. After having passed the outlet valve 506, a secondary pump 508 is passed. At a tee point 510 a flow is measured (signal PsensSys).

It should be noted that the term "comprising" does not exclude other elements or features and the "a" or "an" does not exclude a plurality. Also elements described in association with different embodiments may be combined. It should also be noted that reference signs in the claims shall not be construed as limiting the scope of the claims.

## Claims

1. A sample separation device (100) for separating a sample, the sample separation device (100) comprising
a first fluid conduit (102) for conducting a first fluid,
a second fluid conduit (104) for conducting a second fluid,
a sample separation unit (106) adapted for separating the sample,
a mixing point (108) in fluid communication with and arranged downstream of the first fluid conduit (102) and the second fluid conduit (104) and being adapted for mixing the first fluid with the second fluid to supply the mixed fluid composition towards the sample separation unit (106) for separation of the sample comprised in the fluid composition,
a leak detection unit (110, 112, 114) adapted for detecting a leak located upstream of or at the mixing point (108), and
a first displacement pump (120) coupled to the first fluid conduit (102) and configured for pumping the first fluid by a volumetric displacement of the first fluid,
**characterized in that** the leak detection unit (110) is configured for detecting the leak by analyzing a displacement of the displacement pump (120) in conjunction with a fluid flow at or upstream of the mixing point (108), when the displacement pump (120) is pumping at a predefined pressure and the fluid flow at or upstream of the mixing point (108) is set to zero.

2. The sample separation device (100) according to claim 1, wherein the leak detection unit (110) is configured for deriving the fluid flow by monitoring the displacement behaviour of the displacement pump (120) over time.

3. The sample separation device (100) according to claim 1 or 2, comprising
a fluid valve (116) adapted to be switchable between a plurality of different operation modes to selectively adjust one of the plurality of operation modes of conducting the first fluid and the second fluid through the sample separation device (100).

4. The sample separation device (100) according to the preceding claim, comprising at least one of:
the fluid valve (116) is arranged upstream the mixing point (108);
the mixing point (108) is integrated in the fluid valve (116);
the fluid valve (116) is adapted for selectively blocking flow of at least one of the first fluid through the first fluid conduit (102) and the second fluid through the second fluid conduit (104).

5. The sample separation device (100) according to claim 1 or any one of the above claims, comprising
a trigger unit (118) adapted for triggering an action in accordance with a detection result of the leak detection unit (110).

6. The sample separation device (100) according to the preceding claim, comprising at least one of:
the action comprises triggering an alarm providing information to an operator of the sample separation device (100) regarding at least one of: the detected and located leak, and a replacement part of the sample separation device (100) to be replaced for repairing the leak;
the action comprises triggering order of a replacement part of the sample separation device (100) to be replaced for repairing the leak;
the action comprises triggering a modified operation mode of operating the sample separation device (100) to compensate for an influence of the detected and located leak on a performance of the sample separation device (100).

7. The sample separation device (100) according to claim 1 or any one of the above claims, comprising:
a blind plug adapted for being plugged into the sample separation device (100) for selectively blocking flow of at least one of the first fluid through the first fluid conduit (102) and the second fluid through the second fluid conduit (104).

8. The sample separation device (100) according to claim 1 or any one of the above claims, comprising at least one of:
a first fluid rate adjustment unit (120), particularly a first pump, adapted for adjusting a flow rate of the first fluid in the first fluid conduit (102);
a second fluid rate adjustment unit (122), particularly a second pump, adapted for adjusting a flow rate of the second fluid in the second fluid conduit (104).

9. A method of leak detection in a system comprising the sample separation device (100) according to any of the preceding claims, wherein a first fluid is mixed with a second fluid at a mixing point (108) to a fluid composition, and the fluid composition is then supplied for separating a sample comprised in the fluid composition; the method comprising
analyzing a volumetric displacement of the first fluid pumped at a predefined pressure;
analyzing a fluid flow at or upstream of the mixing point (108),
deriving an indication of a leak upstream of or at the mixing point (108) from the analyzed volumetric displacement of the first fluid in conjunction with the analyzed fluid flow at or upstream of the mixing point (108).

10. The method of the preceding claim, further comprising
triggering an action by means of the trigger unit (118), in accordance with the derived indication of a leak.

11. The method of the preceding claim, further comprising at least one of:
the action comprises triggering an alarm providing information to an operator of the sample separation device (100) regarding at least one of: the detected and located leak, and a replacement part of the sample separation device (100) to be replaced for repairing the leak;
the action comprises triggering order of a replacement part of the sample separation device (100) to be replaced for repairing the leak.

12. The method of claim 10 or 11, wherein the action comprises triggering a modified operation mode of operating the sample separation device (100) to compensate for an influence of the detected and located leak on a performance of the sample separation device (100).

13. The method according to the preceding claim, wherein the action comprises at least one of:
modifying at least one operation mode of the group consisting of a quantity of the fluid composition of the first fluid and the second fluid, a time-dependence of the fluid composition of the first fluid and the second fluid, a relative contribution of at least one of the first fluid and the second fluid to the fluid composition, and an operation of a pump for pumping at least one of the first fluid and the second fluid;
triggering a modified operation mode of operating the sample separation device (100) so as to perform in accordance with a predefined destination mode of operating the sample separation device (100) adjusted by an operator prior to the occurrence of the leak;
triggering a modified operation mode of operating the sample separation device (100) so as to perform in accordance with a predefined destination mode of operating the sample separation device (100) adjusted by an operator prior to the occurrence of the leak, wherein the action comprises operating a pump pumping a respective fluid through a respective fluid conduit having a detected and located leak with a pump rate being increased as compared to a leak-free pump rate in accordance with a leak rate in the respective fluid conduit.

## Patentansprüche

1. Eine Probentrennvorrichtung (100) zum Trennen einer Probe, wobei die Probentrennvorrichtung (100) aufweist
eine erste Fluidleitung (102) zum Leiten eines ersten Fluids,
eine zweite Fluidleitung (104) zum Leiten eines zweiten Fluids,
eine Probentrenneinheit (106), welche zum Trennen der Probe eingerichtet ist,
einen Mischpunkt (108) in Fluidverbindung mit und stromabwärts angeordnet von der ersten Fluidleitung (102) und der zweiten Fluidleitung (104), und welcher eingerichtet ist zum Mischen des ersten Fluids mit dem zweiten Fluid, um die gemischte Fluidzusammensetzung zu der Probentrenneinheit (106) hinzuführen zum Trennen der Probe, welche in der Fluidzusammensetzung enthalten ist,
eine Leckdetektionseinheit (110, 112, 114), welche eingerichtet ist zum Detektieren eines Lecks, welches sich stromaufwärts von oder bei dem Mischpunkt (108) befindet, und
eine erste Verdrängerpumpe (120), welche mit der ersten Fluidleitung (102) gekoppelt ist und welche konfiguriert ist zum Pumpen des ersten Fluids mittels eines volumetrischen Verdrängens des ersten Fluids,
**dadurch gekennzeichnet, dass** die Leckdetektionseinheit (110) konfiguriert ist zum Detektieren des Lecks mittels Analysierens einer Verdrängung der Verdrängerpumpe (120) in Verbindung mit einem Fluidfluss bei oder stromaufwärts des Mischpunkts (108), wenn die Verdrängerpumpe (120) bei einem vordefinierten Druck pumpt und der Fluidfluss bei oder stromaufwärts des Mischpunkts (108) zu Null gesetzt wird.

2. Die Probentrennvorrichturig (100) gemäß Anspruch 1, wobei die Leckdetektionseinheit (110) konfiguriert ist zum Ableiten des Fluidflusses mittels Überwachens des Verdrängungsverhaltens der Verdrängerpumpe (120) über die Zeit.

3. Die Probentrennvorrichtung (100) gemäß Anspruch 1 oder 2, aufweisend
ein Fluidventil (116), welches eingerichtet ist, zwischen einer Mehrzahl von verschiedenen Betriebsmodi schaltbar zu sein, um selektiv einen von der Mehrzahl von Betriebsmodi des Leitens des ersten Fluids und des zweiten Fluids durch die Probentrennvorrichtung (100) hindurch einzustellen.

4. Die Probentrennvorrichtung (100) gemäß dem vorangehenden Anspruch, aufweisend zumindest eines von:
das Fluidventil (116) ist stromaufwärts des Mischpunkts (108) angeordnet;
der Mischpunkt (108) ist in dem Fluidventil (116) integriert;
das Fluidventil (116) ist eingerichtet zum selektiven Sperren des Flusses von zumindest einem von dem ersten Fluid durch die erste Fluidleitung (102) hindurch und dem zweiten Fluid durch die zweite Fluidleitung (104) hindurch.

5. Die Probentrennvorrichtung (100) gemäß Anspruch 1 oder irgendeinem der vorangehenden Ansprüche, aufweisend
eine Triggereinheit (118), welche eingerichtet ist zum Triggern einer Aktion in Übereinstimmung mit einem Detektionsergebnis der Leckdetektionseinheit (110).

6. Die Probentrennvorrichtung (100) gemäß dem vorangehenden Anspruch, aufweisend zumindest eines von:
die Aktion weist das Triggern eines Alarms auf, welcher einem Betreiber der Probentrennvorrichtung (100) Informationen bereitstellt bezüglich zumindest einem von: dem detektierten und lokalisierten Leck, und einem Ersatzteil der Probentrennvorrichtung (100), welches zum Reparieren des Lecks zu ersetzen ist;
die Aktion weist das Triggern einer Bestellung auf, wonach ein Ersatzteil der Probentrennvorrichtung (100) zum Reparieren des Lecks zu ersetzen ist;
die Aktion weist das Triggern eines modifizierten Betriebsmodus zum Betreiben der Probentrennvorrichtung (100) auf, um einen Einfluss des detektierten und lokalisierten Lecks auf eine Leistung der Probentrennvorrichtung (100) zu kompensieren.

7. Die Probentrennvorrichtung (100) gemäß Anspruch 1 oder irgendeinem der vorangehenden Ansprüche, aufweisend:
einen Blindstopfen, welcher eingerichtet ist, in die Probentrennvorrichtung (100) hinein gesteckt zu werden zum selektiven Sperren des Flusses von zumindest einem von dem ersten Fluid durch die erste Fluidleitung (102) hindurch und dem zweiten Fluid durch die zweite Fluidleitung (104) hindurch.

8. Die Probentrennvorrichtung (100) gemäß Anspruch 1 oder irgendeinem der vorangehenden Ansprüche, aufweisend zumindest eines von:
eine erste Flussrate-Einstellungseinheit (120), insbesondere eine erste Pumpe, welche eingerichtet ist zum Einstellen einer Flussrate des ersten Fluids in der ersten Fluidleitung (102);
eine zweite Flussrate-Einstellungseinheit (122), insbesondere eine zweite Pumpe, welche eingerichtet ist zum Einstellen einer Flussrate des zweiten Fluids in der zweiten Fluidleitung (104).

9. Ein Verfahren zur Leckdetektion in einem System, welches die Probentrennvorrichtung (100) gemäß irgendeinem der vorangehenden Ansprüche aufweist, wobei ein erstes Fluid mit einem zweiten Fluid bei einem Mischpunkt (108) zu einer Fluidzusammensetzung gemischt wird, und die Fluidzusammensetzung dann bereitgestellt wird zum Trennen einer Probe, welche in der Fluidzusammensetzung enthalten ist; wobei das Verfahren aufweist
Analysieren einer volumetrischen Verdrängung des ersten Fluids, welches bei einem vordefinierten Druck gepumpt wird;
Analysieren einer Fluidrate bei oder stromaufwärts des Mischpunkts (108),
Ableiten einer Indikation eines Lecks stromaufwärts von oder bei dem Mischpunkt (108) aus der analysierten volumetrischen Verdrängung des ersten Fluids in Verbindung mit der analysierten Fluidrate bei oder stromaufwärts des Mischpunkts (108).

10. Das Verfahren gemäß dem vorangehenden Anspruch, ferner aufweisend
Triggern einer Aktion mittels der Triggereinheit (118) in Übereinstimmung mit der abgeleiteten Indikation eines Lecks.

11. Das Verfahren gemäß dem vorangehenden Anspruch, ferner aufweisend zumindest eines von:
die Aktion weist das Triggern eines Alarms auf, welcher einem Betreiber der Probentrennvorrichtung (100) Informationen bereitstellt bezüglich zumindest einem von: dem detektierten und lokalisierten Leck, und einem Ersatzteil der Probentrennvorrichtung (100), welches zum Reparieren des Lecks zu ersetzen ist;
die Aktion weist das Triggern einer Bestellung auf, wonach ein Ersatzteil der Probentrennvorrichtung (100) zum Reparieren des Lecks zu ersetzen ist.

12. Das Verfahren gemäß Anspruch 10 oder 11, wobei die Aktion aufweist
das Triggern eines modifizierten Betriebsmodus zum Betreiben der Probentrennvorrichtung (100), um einen Einfluss des detektierten und lokalisierten Lecks auf eine Leistung der Probentrennvorrichtung (100) zu kompensieren.

13. Das Verfahren gemäß dem vorangehenden Anspruch, wobei die Aktion zumindest eines aufweist von:
Modifizieren von zumindest einem Betriebsmodus aus der Gruppe bestehend aus einer Quantität der Fluidzusammensetzung des ersten Fluids und des zweiten Fluids, einer Zeitabhängigkeit der Fluidzusammensetzung des ersten Fluids und des zweiten Fluids, einer relativen Verteilung von zumindest einem von dem ersten Fluid und dem zweiten Fluid auf die Fluidzusammensetzung, und einem Betrieb einer Pumpe zum Pumpen von zumindest einem von dem ersten Fluid und dem zweiten Fluid;
Triggern eines modifizierten Betriebsmodus zum Betreiben der Probentrennvorrichtung (100), um in Übereinstimmung mit einem vordefinierten Zielmodus zum Betreiben der Probentrennvorrichtung (100) zu funktionieren, welcher von einem Betreiber vor dem Auftreten des Lecks eingestellt wurde;
Triggern eines modifizierten Betriebsmodus zum Betreiben der Probentrennvorrichtung (100), um in Übereinstimmung mit einem vorbestimmten Zielmodus zum Betreiben der Probentrennvorrichtung (100) zu funktionieren, welcher von einem Betreiber vor dem Auftreten des Lecks eingestellt wurde, wobei die Aktion das Betreiben einer Pumpe aufweist, welche ein entsprechendes Fluid durch eine entsprechende Fluidleitung pumpt, welche ein detektiertes und lokalisiertes Leck hat, mit einer Pumprate, welche im Vergleich zu einer leckfreien Pumprate gesteigert ist, in Übereinstimmung mit einer Leckrate in der entsprechenden Fluidleitung.

## Revendications

1. Dispositif de séparation d'échantillon (100) pour séparer un échantillon, le dispositif de séparation d'échantillon (100) comprenant :
un premier conduit de fluide (102) pour conduire un premier fluide,
un second conduit de fluide (104) pour conduire un second fluide,
une unité de séparation d'échantillon (106) adaptée pour séparer l'échantillon,
un point de mélange (108) en communication fluidique avec le premier conduit de fluide (102) et le second conduit de fluide (104), et agencé en aval de ceux-ci, et étant adapté pour mélanger le premier fluide avec le second fluide pour fournir la composition de fluides mélangés vers l'unité de séparation d'échantillon (106) pour la séparation de l'échantillon compris dans la composition de fluides,
une unité de détection de fuite (110, 112, 114) adaptée pour détecter une fuite située en amont ou au niveau du point de mélange (108), et
une première pompe volumétrique (120) accouplée au premier conduit de fluide (102) et configurée pour pomper le premier fluide par l'intermédiaire d'un déplacement volumétrique du premier fluide,
**caractérisé en ce que** l'unité de détection de fuite (110) est configurée pour détecter la fuite en analysant un déplacement de la pompe volumétrique (120) conjointement avec un écoulement de fluide au niveau ou en amont du point de mélange (108), lorsque la pompe volumétrique (120) pompe à une pression prédéfinie et l'écoulement de fluide au niveau ou en amont du point de mélange (108) est réglé à zéro.

2. Dispositif de séparation d'échantillon (100) selon la revendication 1, dans lequel l'unité de détection de fuite (110) est configurée pour obtenir l'écoulement de fluide en surveillant le comportement de déplacement de la pompe volumétrique (120) au fil du temps.

3. Dispositif de séparation d'échantillon (100) selon la revendication 1 ou 2, comprenant :
une soupape à fluide (116) adaptée pour être commutable entre une pluralité de différents modes de fonctionnement pour régler sélectivement un parmi la pluralité de modes de fonctionnement de conduction du premier fluide et du second fluide à travers le dispositif de séparation d'échantillon (100).

4. Dispositif de séparation d'échantillon (100) selon la revendication précédente, comprenant au moins un parmi :
la soupape à fluide (116) est agencée en amont du point de mélange (108) ;
le point de mélange (108) est intégré dans la soupape à fluide (116) ;
la soupape à fluide (116) est adaptée pour bloquer sélectivement l'écoulement d'au moins un parmi le premier fluide à travers le premier conduit de fluide (102) et le second fluide à travers le second conduit de fluide (104).

5. Dispositif de séparation d'échantillon (100) selon la revendication 1 ou l'une quelconque des revendications précédentes, comprenant :
une unité de déclenchement (118) adaptée pour déclencher une action conformément à un résultat de détection de l'unité de détection de fuite (110).

6. Dispositif de séparation d'échantillon (100) selon la revendication précédente, comprenant au moins une parmi :
l'action comprend le déclenchement d'une alarme fournissant des informations à un opérateur du dispositif de séparation d'échantillon (100) en ce qui concerne au moins une parmi : la fuite détectée et localisée, et une pièce de remplacement du dispositif de séparation d'échantillon (100) destinée à être remplacée pour réparer la fuite ;
l'action comprend le déclenchement d'une commande d'une pièce de remplacement du dispositif de séparation d'échantillon (100) destinée à être remplacée pour réparer la fuite ;
l'action comprend le déclenchement d'un mode de fonctionnement modifié de fonctionnement du dispositif de séparation d'échantillon (100) pour compenser une influence de la fuite détectée et localisée sur une performance du dispositif de séparation d'échantillon (100).

7. Dispositif de séparation d'échantillon (100) selon la revendication 1 ou l'une quelconque des revendications précédentes, comprenant :
un bouchon borgne adapté pour être installé dans le dispositif de séparation d'échantillon (100) pour sélectivement bloquer l'écoulement d'au moins un parmi le premier fluide à travers le premier conduit de fluide (102) et le second fluide à travers le second conduit de fluide (104).

8. Dispositif de séparation d'échantillon (100) selon la revendication 1 ou l'une quelconque des revendications précédentes, comprenant au moins une parmi :
une première unité de réglage de débit de fluide (120), particulièrement une première pompe, adaptée pour régler un débit du premier fluide dans le premier conduit de fluide (102) ;
une seconde unité de réglage de débit de fluide (122), particulièrement une seconde pompe, adaptée pour régler un débit du second fluide dans le second conduit de fluide (104).

9. Procédé de détection de fuite dans un système comprenant le dispositif de séparation d'échantillon (100) selon l'une quelconque des revendications précédentes, dans lequel un premier fluide est mélangé avec un second fluide au niveau d'un point de mélange (108) en une composition de fluides, et la composition de fluides est alors fournie pour séparer un échantillon compris dans la composition de fluides ; le procédé comprenant :
l'analyse d'un déplacement volumétrique du premier fluide pompé à une pression prédéfinie ;
l'analyse d'un écoulement de fluide au niveau ou en amont du point de mélange (108),
l'obtention d'une indication d'une fuite en amont ou au niveau du point de mélange (108) à partir du déplacement volumétrique analysé du premier fluide conjointement avec l'écoulement de fluide analysé au niveau ou en amont du point de mélange (108).

10. Procédé de la revendication précédente, comprenant en outre :
le déclenchement d'une action au moyen de l'unité de déclenchement (118), conformément à l'indication obtenue d'une fuite.

11. Procédé de la revendication précédente, comprenant en outre au moins une parmi :
l'action comprend le déclenchement d'une alarme fournissant des informations à un opérateur du dispositif de séparation d'échantillon (100) en ce qui concerne au moins une parmi : la fuite détectée et localisée, et une pièce de remplacement du dispositif de séparation d'échantillon (100) destinée à être remplacée pour réparer la fuite ;
l'action comprend le déclenchement d'une commande d'une pièce de remplacement du dispositif de séparation d'échantillon (100) destinée à être remplacée pour réparer la fuite.

12. Procédé selon la revendication 10 ou 11, dans lequel l'action comprend le déclenchement d'un mode de fonctionnement modifié de fonctionnement du dispositif de séparation d'échantillon (100) pour compenser une influence de la fuite détectée et localisée sur une performance du dispositif de séparation d'échantillon (100).

13. Procédé selon la revendication précédente, dans lequel l'action comprend au moins un parmi :
la modification d'au moins un mode de fonctionnement du groupe constitué d'une quantité de la composition de fluides du premier fluide et du second fluide, d'une dépendance temporelle de la composition de fluides du premier fluide et du second fluide, d'une contribution relative d'au moins un parmi le premier fluide et le second fluide à la composition de fluides, et d'un fonctionnement d'une pompe pour pomper au moins un parmi le premier fluide-et le second fluide ;
le déclenchement d'un mode de fonctionnement modifié de fonctionnement du dispositif de séparation d'échantillon (100) afin de réaliser une performance conformément à un mode à destination prédéfinie de fonctionnement du dispositif de séparation d'échantillon (100) réglé par un opérateur avant l'apparition de la fuite ;
le déclenchement d'un mode de fonctionnement modifié de fonctionnement du dispositif de séparation d'échantillon (100) afin de réaliser une performance conformément à un mode à destination prédéfinie de fonctionnement du dispositif de séparation d'échantillon (100) réglé par un opérateur avant l'apparition de la fuite, dans lequel l'action comprend le fonctionnement d'une pompe pompant un fluide respectif à travers un conduit de fluide respectif comportant une fuite détectée et localisée avec un débit de pompe augmenté par rapport à un débit de pompe sans fuite conformément à un débit de fuite dans le conduit de fluide respectif.
